(19) Europäisches Patentamt
European Patent Office
Office européen des brevets

(11) Publication number: **0 538 931 A2**

# (12) EUROPEAN PATENT APPLICATION

(21) Application number: **92203067.1**

(22) Date of filing: **06.10.92**

(51) Int. Cl.5: **C08G 59/68**, C09D 163/00, C09D 167/00

(30) Priority: **11.10.91 NL 9101702**

(43) Date of publication of application: **28.04.93 Bulletin 93/17**

(84) Designated Contracting States: **AT BE CH DE DK ES FR GB IT LI NL SE**

(71) Applicant: **DSM N.V.**
**Het Overloon 1**
**NL-6411 TE Heerlen(NL)**

(72) Inventor: **Wories, Herman Jelle**
**Romulushof 43**
**NL-6215 EJ Maastricht(NL)**
Inventor: **van den Elshout, Wilhelmus Henricus Hubertus A.**
**Onderstehof 9**
**NL-6132 SM Sittard(NL)**
Inventor: **Binda, Paul Herman Guillaume**
**Meppelerdiep 5**
**NL-8032 TB Zwolle(NL)**

## (54) Curing catalyst for the reaction between carboxyl functional polymers and epoxy functional compounds for use in the preparation of powder coatings.

(57) The invention relates to a curing catalyst for the reaction between carboxyl functional polymers and epoxy functional compound as a basis for powder coatings.

The catalyst is a pyridine according to formula (I),

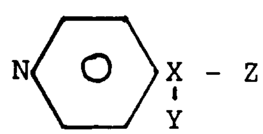

(I)

in which:
X = N,
Z = $(C_1\text{-}C_{10})$alkyl or aryl and
Y = $(C_1\text{-}C_{10})$alkyl and
in which Z and Y together can form a ring which, in addition to a carbon atom, can contain an oxygen atom, a sulphur atom and/or a nitrogen atom
or
X = N,
Z =

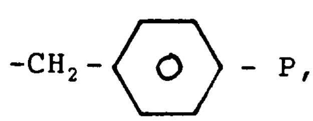

Y = $(C_1\text{-}C_{10})$alkyl and
P = polymer
or

EP 0 538 931 A2

X =

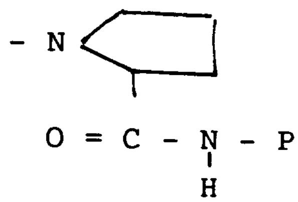

and

P = polymer.

The invention relates to a curing catalyst for the reaction between carboxyl functional polymers and epoxy functional compounds for use in the preparation of powder coatings.

A suitable catalyst for this reaction is disclosed in EP-B-125906. The catalyst used is benzotriazole, which is optionally substituted on the aromatic ring by a hydrogen atom or an alkyl group having 1-4 carbon atoms.

Although the catalysts according to EP-B-125906 result in reasonable powder coatings with respect to hardness, flow and curing time, there is a need for better catalysts.

The aim of the invention is to provide a curing catalyst for the reaction between carboxyl functional polymers and epoxy functional compounds for use in the preparation of powder coatings which have an outstanding combination of properties with respect to flow, gloss, curing time, colour characteristics, reactivity and stability.

The invention is characterized in that the catalyst is a pyridine according to formula (I)

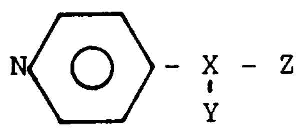

(I)

in which:
X = N,
Z = $(C_1-C_{10})$alkyl or aryl and
Y = $(C_1-C_{10})$alkyl and
in which Z and Y together can form a ring which, in addition to a carbon atom, can contain an oxygen atom, a sulphur atom and/or a nitrogen atom
or
X = N,
Z =

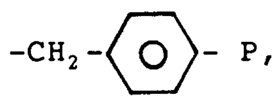

Y = $(C_1-C_{10})$alkyl and
P = polymer
or
X =

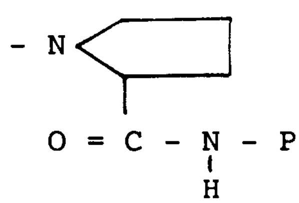

and

P = polymer

With this catalyst powder coatings, based on the reaction of carboxyl functional polymers and epoxy functional compounds, having a good impact strength, a good gloss, a good flow, a good curing time, a good storage stability, a good solvent resistance, good colour characteristics and a good weather resistance are obtained.

According to a preferred embodiment of the invention, the catalyst is a pyridine according to formula (I) in which
X = N,
Z = $(C_1-C_{10})$ alkyl and
Y = $(C_1-C_{10})$ alkyl

Preferably, Z = ($C_1$-$C_4$) alkyl and Y = ($C_1$-$C_4$) alkyl.

Suitable compounds according to this preferred embodiment of formula (I) are N,N-dialkylpyridines, such as for example p-dimethylaminopyridine and p-diethylaminopyridine. Other suitable compounds are p-pyrrolidinopyridine and piperidinopyridine. Both ortho-, meta- and para-substituted N,N-dialkylpyridines can be used.

Preferably, para-dimethyl-aminopyridine is used.

Polymer alkylaminopyridines according to formula (I) are described in J. Am. Chem. Soc. 1982, 104, 799 and in Makromol Chem., Rapid Commun., 3, (1982), 537-542.

Suitable alkylaminopyridines according to formula (I) in which Z =

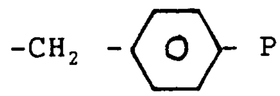

and P is polymer are, for example, based on copolymers of styrene and 4-(N-methyl-N-p-vinylbenzylamino)pyridine. Preferably, the copolymer is based on styrene divinylbenzene and 4-(N-methyl-N-p-vinylbenzylamino)pyridine.

Suitable polymer alkylaminopyridines according to formula (I) in which
X =

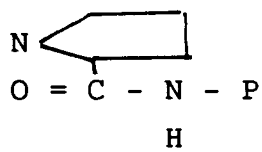

are, for example, based on polyethylene imines, polyamines, polyamides, polyurethanes and polyurea. Preferably, the polymer is based on laurylated polyethylene imines to which N-(4-pyridyl)proline has been coupled via a carbodiimide.

Powder coatings have become considerably more popular over the past decade because these coatings are environmentally friendly, easy to use and of good quality. Coating systems based on polyesters play an important part here. In this context it is possible, for example, to differentiate between a number of systems. One of these systems consists, for example, of a carboxyl functional polyester and triglycidyl isocyanurate (TGIC) in a ratio of 93:7 and is used if good weather resistance is required (for example cladding, garden furniture, bicycles). Another system consists of an acid polyester in combination with an epoxy resin based on bisphenol-A and, inter alia because of discolouration on exposure to outdoor light (UV), is suitable only for indoor use (for example refrigerators). In both systems curing takes place at relatively high temperatures (180-200 ° C) by reaction of the carboxyl groups of the polyester with the epoxide groups of the second component, usually under the influence of catalysts. This curing reaction is described by Tosko Misev in Powder Coatings; Chemistry and Technology at pages 45-48 (John Wiley 1991).

The present catalysts are suitable curing catalysts for the reaction between a carboxyl functional polymer, preferably an acid-terminated polyester, and an epoxy functional compound as the basis for powder coatings.

The acid-terminated polyester resins are mixed at a temperature of, for example, about 110 ° C-130 ° C, for example by means of extrusion, with a polyfunctional epoxide, pigments and other additives and, after electrostatic spraying, are cured at temperatures between 160 ° C and 200 ° C under the influence of the catalyst. During the curing process, the powder melts and this then has to flow out to give a smooth, coherent coating film before the curing reaction properly starts. The catalyst must guarantee rapid curing but must be virtually inactive during mixing of the polyester and the epoxy compound. After the polyester has been prepared at temperatures of about 250 ° C and is then cooled to 190 ° C-200 ° C, the curing catalyst according to the invention is added. The catalyst can, however, also be added during mixing of the polyester and the epoxy functional compound. The conditions which must be met by a catalyst of this type, that is to say virtually no reaction at temperatures of up to 100-130 ° C, but a rapid reaction at temperatures above 140 ° C, signify that there must be a very high dependence on the temperature.

The catalysts are preferably used in amounts of between 0.01% by weight and 2.0% by weight (with respect to the resin), and preferably in amounts of between 0.03 and 0.7% by weight (with respect to the

resin).

The importance of the catalyst level is disclosed by Tosko Misev in Powder Coatings; Chemistry and Technology at pages 199-244.

Suitable polyesters can be obtained, via conventional preparation methods, from essentially aromatic polycarboxylic acids, such as phthalic acid, isophthalic acid, terephthalic acid, pyromellitic acid, trimellitic acid, 3,6-dichloro phthalic acid, tetrachloro phthalic acid and, respectively, insofar as these are obtainable, the anhydrides, acid chlorides or lower alkyl esters thereof. The carboxylic acid component usually consists to the extent of at least 50% by weight, and preferably of at least 70 mol%, of isophthalic acid and/or terephthalic acid.

Polycarboxylic acids which can also be used are cycloaliphatic and/or acyclic polycarboxylic acids, such as, for example, cyclohexane dicarboxylic acid, tetrahydro phthalic acid, hexahydro endomethylene tetrahydro phthalic acid, azelaic acid, sebacic acid, decane dicarboxylic acid, dimer fatty acid, adipic acid, succinic acid and maleic acid, in amounts of up to at most 30 mol%, and preferably up to at most 20 mol%, of the total carboxylic acids. Hydroxy carboxylic acids and/or optionally lactones can also be used, such as, for example, 12-hydroxy stearic acid, epsilon-caprolactone and the hydroxy pivalic acid ester of neopentyl glycol. Monocarboxylic acids, such as benzoic acid, tert-butylbenzoic acid and hexahydro benzoic acid, and saturated aliphatic monocarboxylic acids can also be added in minor amounts in the preparation.

Furthermore, in particular aliphatic diols, such as ethylene glycol, propane-1,2-diol, propane-1,3-diol, butane-1,2-diol, butane-1,4-diol, butane-1,3-diol, 2,2-dimethyl propane-1,3-diol (= neopentyl glycol), hexane-2,5-diol, hexane-1,6-diol, 2,2-[bis-(4-hydroxy cyclohexyl)]-propane, 1,4-dimethylolcyclohexane, diethylene glycol, dipropylene glycol and 2,2-bis-[4-(2-hydroxy-ethoxy)]-phenyl propane and smaller amounts of polyols, such as glycerol, hexanetriol, pentaerythritol, sorbitol, trimethylol ethane, trimethylol propane and tris-(2-hydroxy)-isocyanurate can be used. Epoxy compounds can also be used in place of diols or polyols. Preferably, the alcohol component contains at least 50 mol% of neopentyl glycol and/or propylene glycol.

The polyesters are prepared, via methods known per se, by esterification or transesterification, optionally in the presence of conventional catalysts, such as, for example, dibutyltin oxide or tetrabutyl titanate, end products having an acid number of between 5 and 150 being obtained by a suitable choice of the preparation conditions and of the COOH/OH ratio.

The epoxy functional compound which is used can be, for example, triglycidyl isocyanurate (TGIC) or a related heterocyclic triepoxy compound, such as, for example, methyl-substituted triglycidyl isocyanurate or 1,2,4-triglycidyl triazolidine-3,5-dione or diglycidyl terephthalate or diglycidyl hexahydro terephthalate or an epoxy resin based on bisphenol-A and epichlorohydrin.

The amount of epoxy functional compound which depends on the acid number and on the epoxy equivalent weight of the epoxy compound with which the polyester resin is combined, is in general between 0.8 and 1.2 epoxy equivalent per carboxyl equivalent.

The technology and production of powder coatings is disclosed at pages 224-226 of said reference Powder Coatings; Chemistry and Technology.

Of course, all conventional additives, such as, for example, pigments, fillers, flow aid and/or stabilizers, can be added to the coating systems. Suitable pigments include, for example, inorganic pigments, such as titanium dioxide, zinc sulphide, iron oxide and chromium oxide, and organic pigments, such as azo compounds. Suitable fillers include, for example, metal oxides, silicates, carbonates and sulphates.

Powder coatings according to this invention can be applied in general industrial and domestic appliances, functional coatings, metal furniture, architectural applications, automotive top finishes, corrosion protective coatings, and finishes for wood, plastics and paper.

The use of dialkyl aminopyridine as catalyst in the preparation of powder coatings is already disclosed in JP-A-62135574. However, this application relates to powder coatings which have been obtained by reaction of bisphenol-A epoxy resins with specific straight-chain phenol resins. The present acid-epoxy curing reactions and the reaction in said JP-A-62135574 are chemically different and show different technical problems which need different technical solutions.

The invention is illustrated in more detail with the aid of the examples given below, without, however, being restricted thereto.

## Examples

### Example I

420 parts by weight of a carboxylic acid-terminated polyester (Uralac P 3500™; DSM Resins B.V.) having an acid number of 30 mg KOH/gram were mixed in an extruder (Werner and Pfleiderer, ZSK 30) at

120 °C with 180 parts by weight of solid epoxy resin having an epoxy equivalent of 725 (Araldite GT 7004™, Ciba Geigy), with 400 parts of titanium dioxide pigment (CL 310™, Kronos), with 9 parts by weight flow agent (RV-5™, Worlée), with 4.5 parts by weight of benzoin and 2.1 parts by weight (0.5% by weight) of para-dimethylaminopyridine. After cooling, the extrudate was reduced in size, crushed and sieved to a particle size of 90 µm.

Example II

558 parts by weight of a carboxylic acid-terminated polyester (Uralac P 3500™; DSM Resins B.V.) having an acid number of 35 mg KOH/gram were mixed in an extruder (Werner and Pfleiderer, ZSK 30) at 120 °C with 42 parts by weight trisglycidylisocyanurate (Araldite 813, Ciba Geigy), with 400 parts of titanium dioxide pigment (CL 310™, Kronos), with 9 parts by weight flow agent (RV-5™, Worlée), with 4.5 parts by weight of benzoin and 0,45 parts by weight paradimethylaminopyridine. After cooling, the extrudate was reduced in size, crushed and sieved to a particle size of 90 µm.

The powders obtained according to Example I and II were applied electrostatically to bonderized panels in a layer thickness (after curing) of 50-60 µm. The powder paint was then cured for 25 minutes at 200 °C.

Comparative Example A

Example I was repeated except that 2.1 parts by weight of benzotriazole were used in place of 2.1 parts by weight of para-dimethylaminopyridine.

The reversed impact of the coatings obtained according to Example I and Comparative Example A was determined according to ASTM-D-2794-69. The flow of the surface was visually determined. The results are given in Table I.

TABLE I

| Coating according to Example | Reversed impact | Surface flow |
|---|---|---|
| I | G | 1 |
| II | G | 1 |
| A | U | 2 |

where
G = good
U = unsatisfactory
1 = excellent
2 = reasonable

**Claims**

1. Curing catalyst for the reaction between carboxyl functional polymers and epoxy functional compounds for use in the preparation of powder coatings, characterized in that the catalyst is a pyridine according to formula (I):

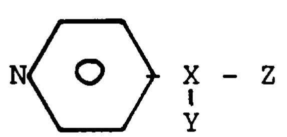

(I)

in which:
X = N,
Z = ($C_1$-$C_{10}$)alkyl or aryl and
Y = ($C_1$-$C_{10}$)alkyl and

in which Z and Y together can form a ring which, in addition to a carbon atom, can contain an oxygen atom, a sulphur atom and/or a nitrogen atom
or
X = N,
Z =

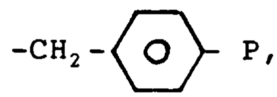

Y = $(C_1\text{-}C_{10})$alkyl and
P = polymer
or
X =

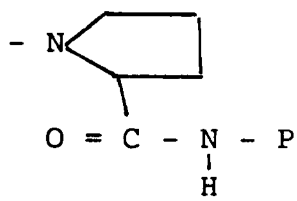

and

P = polymer.

**2.** Catalyst according to claim 1, characterized in that
X = N,
Z = $(C_1\text{-}C_{10})$alkyl and
Y = $(C_1\text{-}C_{10})$alkyl.

**3.** Catalyst according to claim 2, characterized in that
Z = $(C_1\text{-}C_4)$alkyl and
X = $(C_1\text{-}C_4)$alkyl.

**4.** Catalyst according to any one of claims 1-3, characterized in that the catalyst is para-dimethylaminopyridine.

**5.** Method for the preparation of powder coatings based on carboxyl functional polymers, epoxy functional compounds and a curing catalyst, characterized in that the catalyst is a pyridine according to formula (I)

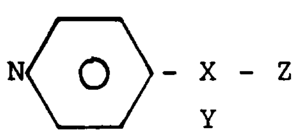

(I)

in which:
X = N,
Z = $(C_1\text{-}C_{10})$alkyl or aryl and
Y = $(C_1\text{-}C_{10})$alkyl and
in which Z and Y together can form a ring which, in addition to a carbon atom, can contain an oxygen atom, a sulphur atom and/or a nitrogen atom
or
X = N,
Z =

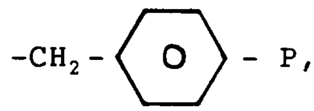

Y = ($C_1$-$C_{10}$)alkyl and
P = polymer
or
X =

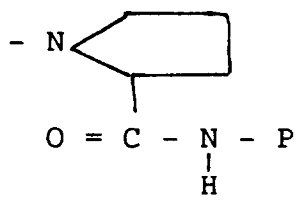 and

P = polymer

**6.** Method according to claim 5, characterized in that
X = N,
Z = ($C_1$-$C_{10}$)alkyl and
Y = ($C_1$-$C_{10}$)alkyl.

**7.** Method according to any one of claims 6-7, characterized in that the catalyst is para-dimethylaminopyridine.

**8.** Use of a catalyst according to any one of claims 1-4 as curing catalyst for the reaction between carboxyl functional polymers and epoxy functional compounds in the preparation of powder coatings.

**9.** Powder coatings based on the reaction between carboxyl function polymers and epoxy function compounds in the presence of a curing catalyst according to any one of claims 1-4.

**10.** Completely or partially coated substrate, characterized in that the substrate is coated with a powder coating obtained according to any one of claims 5-7.